# FASCICULE DE BREVET EUROPEEN

(11) **EP 3 190 681 B1**
(45) Date de publication et mention de la délivrance du brevet: **11.09.2019**
(21) Numéro de dépôt: 17150313.9
(22) Date de dépôt: 04.01.2017
(51) Int. Cl.: H02J 7/04, H02J 7/35

(54) **PROCÉDÉ ET DISPOSITIF DE CHARGE D'UNE BATTERIE**
VERFAHREN UND VORRICHTUNG ZUM AUFLADEN EINER BATTERIE
METHOD AND DEVICE FOR CHARGING A BATTERY

(30) Priorité: 07.01.2016 FR 1650116
(43) Date de publication de la demande: 12.07.2017
(73) Titulaire: COMMISSARIAT À L'ÉNERGIE ATOMIQUE ET AUX ÉNERGIES ALTERNATIVES, 75015 Paris (FR); BUBENDORFF Société Anonyme, 68220 Attenschwiller (FR)
(72) Inventeur: ZARA, Henri, 73370 LE BOURGET DU LAC (FR); VIAL, Franck, 38850 PALADRU (FR); KLEIN, Jean-Marie, 73230 VIVIERS DU LAC (FR); DESMOULIERE, Jean-Baptiste, 73230 SAINT-JEAN-D'ARVEY (FR); FRITSCH, Thomas, 67800 HOENHEIM (FR)
(74) Mandataire: Cabinet Beaumont

(56) Documents cités:
- EP-A1- 2 634 035
- EP-A2- 2 416 464
- WO-A1-2014/056086
- FR-A1- 3 013 151
- FR-A1- 3 015 124

## Description

### Domaine

La présente demande concerne un procédé de charge d'une batterie d'accumulateurs électriques d'un système autonome.

### Exposé de l'art antérieur

Un système autonome comprend un système électrique ou électromécanique, une batterie d'accumulateurs pour l'alimentation électrique du système électrique ou électromécanique et un générateur électrique pour la charge de la batterie. Un exemple de système autonome correspond à un volet roulant électrique alimenté par une batterie dont la charge est réalisée par des cellules photovoltaïques.

Il est généralement souhaitable que l'autonomie de fonctionnement du système autonome soit la plus longue possible. Dans ce but, on pourrait considérer qu'il est avantageux de charger la batterie au maximum dès que le générateur peut fournir de l'énergie électrique afin d'assurer une autonomie maximale dans le cas où le générateur fournit peu d'énergie électrique pendant une longue période. Toutefois, il peut être préférable de limiter l'état de charge maximale de la batterie lorsque la température de la batterie est trop élevée. En effet, la combinaison d'un état de charge élevé et d'une température élevée accélère le vieillissement de la batterie que ce soit au repos ou en fonctionnement.

Pour certaines applications, la batterie d'un système autonome peut être placée dans un espace non climatisé. En particulier, lorsque la batterie est disposée en extérieur, la température de la batterie peut varier fortement au cours de l'année. A titre d'exemple, pendant la période estivale, la température de la batterie peut s'élever fortement de façon temporaire au cours de la journée.

Il est connu de modifier l'état de charge maximale de la batterie en fonction de la température ambiante, voire de déconnecter la batterie du générateur. Toutefois, ce type de régulation est une régulation par réaction et non une régulation par anticipation. Il peut ne pas empêcher dans certains cas une dégradation de la batterie. En effet, lorsque l'état de charge de la batterie est déjà élevé et que la température ambiante augmente, une commande de réduction de l'état de charge maximale de la batterie reste sans effet de sorte que la batterie va fonctionner à température élevée et avec un état de charge élevé et la durée de vie de la batterie peut diminuer.

Le document FR3015124 décrit un procédé de charge d'une batterie et le document EP2416464 décrit un module photovoltaïque de production d'énergie électrique.

### Résumé

Un objet d'un mode de réalisation est de pallier tout ou partie des inconvénients des systèmes autonomes décrits précédemment.

Un autre objet d'un mode de réalisation est d'augmenter la durée de vie de la batterie.

Un autre objet d'un mode de réalisation est d'augmenter l'autonomie de fonctionnement du système autonome.

Un autre objet d'un mode de réalisation est que la charge de la batterie s'adapte automatiquement aux conditions environnementales.

Ainsi, un mode de réalisation prévoit un procédé de charge d'une batterie d'accumulateurs électriques à partir de l'énergie électrique fournie par un générateur électrique, dans lequel la batterie est chargée à un premier état de charge maximale dans un premier mode de fonctionnement et à un deuxième état de charge maximale, strictement inférieur au premier état de charge maximale, dans un deuxième mode de fonctionnement, le procédé comprenant le passage du premier mode de fonctionnement au deuxième mode de fonctionnement lorsqu'une première condition relative à la durée du jour, ou à la variation de la durée du jour, est remplie et comprenant le passage du deuxième mode de fonctionnement au premier mode de fonctionnement lorsque des deuxièmes conditions sont remplies, les deuxièmes conditions comprenant la détermination que la durée du jour devient inférieure à un premier seuil de durée et la détermination qu'un critère déterminé à partir des conditions environnementales du générateur électrique ou de la batterie est rempli.

Selon un mode de réalisation, le critère est déterminé à partir de l'irradiance globale reçue par le générateur électrique ou la batterie ou à partir de la température extérieure de la batterie.

Selon un mode de réalisation, le générateur électrique comprend des cellules photovoltaïques.

Selon un mode de réalisation, le critère est déterminé à partir de l'irradiance globale reçue par les cellules photovoltaïques ou de la température extérieure.

Selon un mode de réalisation, la première condition consiste à déterminer si la durée du jour est égale à la durée du jour au solstice d'hiver.

Selon un mode de réalisation, la première condition consiste à déterminer si la durée du jour augmente pendant plusieurs jours consécutifs.

Selon un mode de réalisation, la première condition consiste à déterminer si la durée du jour diminue puis augmente.

Selon un mode de réalisation, la première condition consiste à déterminer si la durée du jour devient inférieure ou supérieure à un deuxième seuil de durée strictement inférieur au premier seuil de durée.

Selon un mode de réalisation, le procédé comprend la détermination de la durée pendant laquelle l'irradiance globale reçue par le générateur électrique ou la batterie est supérieure à un seuil d'irradiance globale ou la détermination de la durée pendant laquelle la température extérieure de la batterie est supérieure à un seuil de température, et le critère consiste à déterminer si ladite durée est supérieure à un troisième seuil de durée.

Selon un mode de réalisation, le premier seuil de durée est égal à 12 heures à plus ou moins 15 minutes.

Selon un mode de réalisation, le procédé comprend le passage du deuxième mode de fonctionnement au premier mode de fonctionnement lorsqu'il est déterminé successivement que la durée du jour devient inférieure au premier seuil de durée et que le critère est rempli.

Selon un mode de réalisation, la charge de la batterie est, en outre, interdite tant que la température de la batterie est supérieure à un premier seuil de température.

Selon un mode de réalisation, la charge de la batterie est, en outre, interdite tant que la température de la batterie est inférieure à un deuxième seuil de température.

Un mode de réalisation prévoit également un système comprenant un générateur électrique, une batterie, un circuit de charge de la batterie à partir de l'énergie électrique fournie par le générateur et un module de commande du circuit de charge, le module de commande étant adapté à commander la charge de la batterie à un premier état de charge maximale dans un premier mode de fonctionnement et à un deuxième état de charge maximale, strictement inférieur au premier état de charge maximale, dans un deuxième mode de fonctionnement, le module de commande étant adapté à passer du premier mode de fonctionnement au deuxième mode de fonctionnement lorsqu'une première condition relative à la durée du jour, ou à la variation de la durée du jour, est remplie et adapté à passer du deuxième mode de fonctionnement au premier mode de fonctionnement lorsque des deuxièmes conditions sont remplies, les deuxièmes conditions comprenant la détermination que la durée du jour devient inférieure à un premier seuil de durée et la détermination qu'un critère déterminé à partir des conditions environnementales du générateur électrique ou de la batterie est rempli.

Selon un mode de réalisation, le générateur électrique comprend des cellules photovoltaïques.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon partielle et schématique, un mode de réalisation d'un système autonome ;
la figure 2 est un diagramme de fonctionnement d'un mode de réalisation d'un premier procédé de charge de batterie mis en oeuvre par le système autonome représenté en figure 1 ;
la figure 3 est un diagramme de fonctionnement d'un autre mode de réalisation d'un deuxième procédé de charge de batterie mis en oeuvre par le système autonome représenté en figure 1 ;
la figure 4 est un diagramme de fonctionnement plus détaillé d'un mode de réalisation du deuxième procédé de charge de batterie mis en oeuvre par le système autonome représenté en figure 1 ; et
la figure 5 est un diagramme de fonctionnement plus détaillé d'un autre mode de réalisation du deuxième procédé de charge de batterie mis en oeuvre par le système autonome représenté en figure 1.

### Description détaillée

De mêmes éléments ont été désignés par de mêmes références aux différentes figures. Par souci de clarté, seuls les éléments qui sont utiles à la compréhension des modes de réalisation décrits ont été représentés et sont détaillés. En particulier, la structure d'un accumulateur électrique d'une batterie d'accumulateurs est bien connue et n'est pas décrite en détail. Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence à l'orientation des figures. Sauf précision contraire, les expressions "approximativement", "sensiblement", et "de l'ordre de" signifient à 10 % près, de préférence à 5 % près.

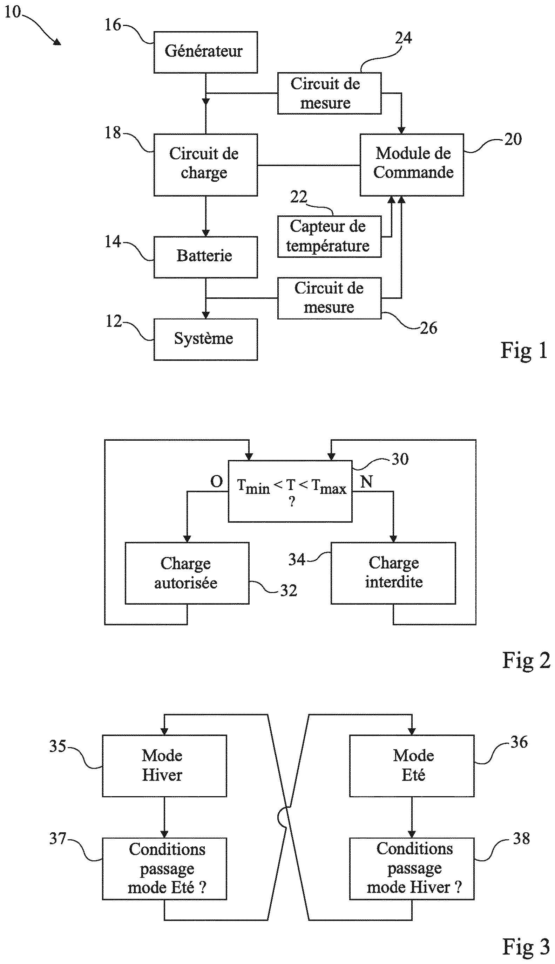

La figure 1 représente un mode de réalisation d'un système autonome 10 comprenant :
un système électrique ou électromécanique 12 ;
au moins une batterie 14 d'accumulateurs électriques permettant l'alimentation électrique du système électrique ou électromécanique 12 ;
un générateur électrique 16 pour la charge de la batterie 14 ;
un circuit de charge 18 connecté entre le générateur électrique 16 et la batterie 14 ;
un module 20 de commande du circuit de charge 18 ;
un capteur 22 de la température de la batterie 14 relié au module de commande 20 ;
un circuit 24 de mesure de la tension aux bornes du générateur 16 et du courant fourni par le générateur 16 ; et
un circuit 26 de mesure de la tension aux bornes de la batterie 14 et du courant fourni par la batterie 14.

Le système électrique ou électromécanique 12 peut correspondre à n'importe quel type de système requérant une alimentation électrique. A titre d'exemple, le système électrique ou électromécanique 12 correspond à un volet roulant électrique, un portail électrique, une fenêtre à ouverture motorisée, ou un élément de mobilier urbain nécessitant une alimentation électrique, par exemple un horodateur ou un équipement d'éclairage public.

Le générateur électrique 16 peut correspondre à n'importe quel type de source d'énergie électrique. Le générateur électrique 16 peut correspondre à un groupe électrogène ou au réseau électrique. De préférence, le générateur électrique 16 est adapté à fournir de l'énergie électrique à partir d'une énergie renouvelable, par exemple l'énergie solaire, l'énergie éolienne, l'énergie hydraulique ou l'énergie géothermique. A titre d'exemple, le générateur électrique 16 comprend des cellules photovoltaïques adaptées à délivrer en sortie un courant et/ou une tension électrique continu lorsqu'elles reçoivent un rayonnement solaire incident, les cellules photovoltaïques étant reliées entre elles, en série ou en parallèle, par l'intermédiaire d'un circuit électrique et pouvant être agencées sur un ou plusieurs panneaux photovoltaïques, l'ensemble des cellules photovoltaïques reliées entre elles étant appelé centrale photovoltaïque 16 dans la suite de la description. Selon un autre exemple, le générateur électrique 16 comprend au moins une éolienne ou un dispositif hydraulique.

La batterie 14 peut correspondre à une batterie d'accumulateurs électriques de n'importe quel type, notamment une batterie lithium, une batterie nickel-hydrure métallique ou une batterie au plomb. Les accumulateurs électriques de la batterie 14 peuvent être montés en série et/ou en parallèle.

Le module de commande 20 peut correspondre à un circuit dédié et/ou peut comprendre un processeur, par exemple un microprocesseur ou un microcontrôleur, adapté à exécuter des instructions d'un programme d'ordinateur stocké dans une mémoire.

Le circuit de charge 18 est un circuit interposé entre le générateur électrique 16 et la batterie 14. Dans le cas où le générateur électrique 16 comprend des cellules photovoltaïques, le circuit de charge 18 peut seulement correspondre à un circuit empêchant la décharge de la batterie 14 dans les cellules photovoltaïques lorsque celles-ci ne produisent pas d'énergie électrique. De façon plus générale, le circuit de charge 18 peut être adapté à convertir la puissance électrique fournie par le générateur 16 en une puissance électrique adaptée à la charge de la batterie 14. Le circuit de charge 18 comprend, par exemple, un convertisseur de tension, par exemple un convertisseur de type Buck.

Le module de commande 20 est adapté à commander le circuit de charge 18 pour mettre en oeuvre un procédé de charge adapté aux spécificités de la batterie 14. Le module de commande 20 est, par exemple, adapté à mettre en oeuvre un procédé de recherche du point de puissance maximal (MPPT, sigle anglais pour Maximum Power Point Tracking). Le module de commande 20 est, en outre, adapté à commander le circuit de charge 18 pour empêcher la charge de la batterie 14 par le générateur électrique 16.

Selon un mode de réalisation, le capteur de température 22 est disposé au contact des accumulateurs de la batterie 14. Selon un mode de réalisation, plusieurs capteurs de température 22 sont présents et disposés au contact des accumulateurs de la batterie 14 à différents emplacements. La température de la batterie 14 peut alors correspondre à la température la plus élevée parmi les températures mesurées par les capteurs de température ou à une moyenne des températures mesurées par les capteurs de température. Selon un autre mode de réalisation, le capteur de température 22 est adapté à mesurer la température ambiante, c'est-à-dire la température au voisinage de la batterie 14, par exemple à plus de 10 cm de la batterie 14. Le module de commande 18 est alors adapté à estimer la température de la batterie 14 à partir de la température ambiante mesurée en utilisant des abaques stockées en mémoire.

Le module de traitement 20 peut être adapté à déterminer la puissance électrique fournie par le générateur 16 à partir des mesures de la tension et de l'intensité fournies par le circuit de mesure 24. Le module de traitement 20 est, en outre, adapté à estimer l'état de charge de la batterie 14, par exemple au moyen d'abaques stockées en mémoire, à partir des mesures de la température de la batterie 14 fournie par le capteur de température 22 et de la tension aux bornes de la batterie 14 et du courant délivré par la batterie 14 fournis par le circuit de mesure 26.

Selon un mode de réalisation, le module de commande 20 met en oeuvre simultanément deux procédés de commande du circuit de charge 18.

Selon un mode de réalisation, le premier procédé de commande vise à empêcher toute opération de charge de la batterie 14 seulement si la température de la batterie 14 est trop élevée ou trop basse pour éviter une dégradation de la batterie 14.

La figure 2 représente un diagramme de fonctionnement plus détaillé d'un mode de réalisation du premier procédé de commande.

A l'étape 30, le module de commande 20 vérifie si la température de la batterie 14 est comprise entre une température minimale Tₘᵢₙ et une température maximale Tₘₐₓ. A titre d'exemple, la température minimale Tₘᵢₙ est égale à 0°C. A titre d'exemple, la température maximale Tₘₐₓ est comprise entre 40°C et 60°C, de préférence entre 45°C et 50°C. Si la température de la batterie 14 est comprise entre les températures Tₘᵢₙ et Tₘₐₓ, le procédé se poursuit à l'étape 32. Dans le cas contraire, le procédé se poursuit à l'étape 34.

A l'étape 32, le module de commande 20 autorise une opération de charge de la batterie 14. Le procédé se poursuit à l'étape 30.

A l'étape 34, le module de commande 20 empêche toute opération de charge de la batterie 14. Le procédé se poursuit à l'étape 30.

Selon un mode de réalisation, le deuxième procédé de commande vise, pour une opération de charge de la batterie, à sélectionner l'état de charge maximale que peut atteindre la batterie 14 parmi une première valeur et une deuxième valeur. La première valeur, variant de préférence de 80 % à 100 %, par exemple 100 %, est sélectionnée pendant la période de l'année où la température ambiante au voisinage de la batterie 14 est la plus faible. La batterie 14 est alors dite en mode de fonctionnement hivernal. La deuxième valeur, variant de préférence de 60 % à 70 %, par exemple 70 %, est sélectionnée pendant la période de l'année où la température ambiante au voisinage de la batterie 14 est la plus élevée. La batterie 14 est alors dite en mode de fonctionnement estival.

La figure 3 représente un diagramme de fonctionnement d'un mode de réalisation du deuxième procédé de commande.

Le deuxième procédé de commande évolue de façon cyclique entre le mode de fonctionnement hivernal (étape 35) et le mode de fonctionnement estival (étape 36). Lorsque des premières conditions sont remplies (étape 37), le module de commande 20 passe du mode de fonctionnement hivernal au mode de fonctionnement estival et lorsque des deuxièmes conditions sont remplies (étape 38), le module de commande 20 passe du mode de fonctionnement estival au mode de fonctionnement hivernal.

Selon un mode de réalisation, le module 20 commande le passage du mode de fonctionnement estival au mode de fonctionnement hivernal lorsque le solstice d'hiver est atteint.

Selon un mode de réalisation, le module 20 commande le passage du mode de fonctionnement estival au mode de fonctionnement hivernal lorsque deux critères successifs sont remplis. Le premier critère consiste à déterminer que l'équinoxe d'automne est atteint. Le deuxième critère traduit le fait que la puissance électrique moyenne fournie par le générateur électrique 16 a diminué et/ou que les risques de surchauffe de la batterie 14 ont diminué. Le deuxième critère peut être déterminé à partir des conditions environnementales du générateur électrique 16 ou de la batterie 14. A titre d'exemple, le deuxième critère est déterminé à partir de l'irradiance globale reçue par le générateur électrique 16 ou la batterie 14 ou à partir de la température extérieure ou la température de la batterie. La température extérieure peut être mesurée sur une carte électronique par exemple ou au niveau de la batterie. Le deuxième critère peut comprendre la détermination, pendant plusieurs jours consécutifs, par exemple 15 jours, de la durée pendant laquelle l'irradiance globale reçue par le générateur électrique ou la batterie est supérieure à un seuil d'irradiance globale ou la durée pendant laquelle la température extérieure ou la température de la batterie est supérieure à un seuil de température. Le deuxième critère est rempli lorsque la durée d'irradiance globale forte ou la durée de température élevée diminue en-dessous d'un seuil de durée. Dans le cas où le générateur électrique 16 comprend des cellules photovoltaïques, le deuxième critère peut comprendre la détermination, pendant plusieurs jours consécutifs, par exemple 15 jours, de la durée pendant laquelle l'irradiance globale reçue par les cellules photovoltaïques dépasse un seuil d'irradiance globale, appelée durée d'irradiance globale forte. Le deuxième critère est rempli lorsque la durée d'irradiance globale forte diminue en-dessous d'un seuil de durée.

L'irradiance globale ou éclairement énergétique correspond à la puissance d'un rayonnement électromagnétique reçu par un objet par unité de surface. Selon un mode de réalisation, l'irradiance globale mesurée est celle du spectre utile de la lumière du soleil reçue par les cellules photovoltaïques. Dans un plan donné, par exemple celui des panneaux photovoltaïques comprenant les cellules photovoltaïques, l'irradiance globale est la somme de trois composantes :
l'irradiance directe, qui provient directement du soleil, cette composante étant nulle lorsque le soleil est caché par des nuages ou par un obstacle ;
l'irradiance diffuse qui correspond au rayonnement reçu de la voûte céleste, hormis le rayonnement direct ; et
l'irradiance réfléchie qui correspond au rayonnement renvoyé par le sol et l'environnement, cette composante étant nulle sur un plan horizontal.

L'irradiance globale peut être déterminée à partir de la mesure du courant de court-circuit de la centrale photovoltaïque. Ceci permet avantageusement d'augmenter l'état de charge maximale de la batterie 14 suffisamment tôt pour assurer le bon fonctionnement du système autonome 10 pendant la période de l'année où la production d'énergie par le générateur 16 est la plus faible. Dans le cas où le générateur électrique 16 ne comprend pas de cellules photovoltaïques, le module de commande 20 peut déterminer l'irradiance globale de la lumière du soleil reçue par la batterie 14 au moyen d'un capteur adapté.

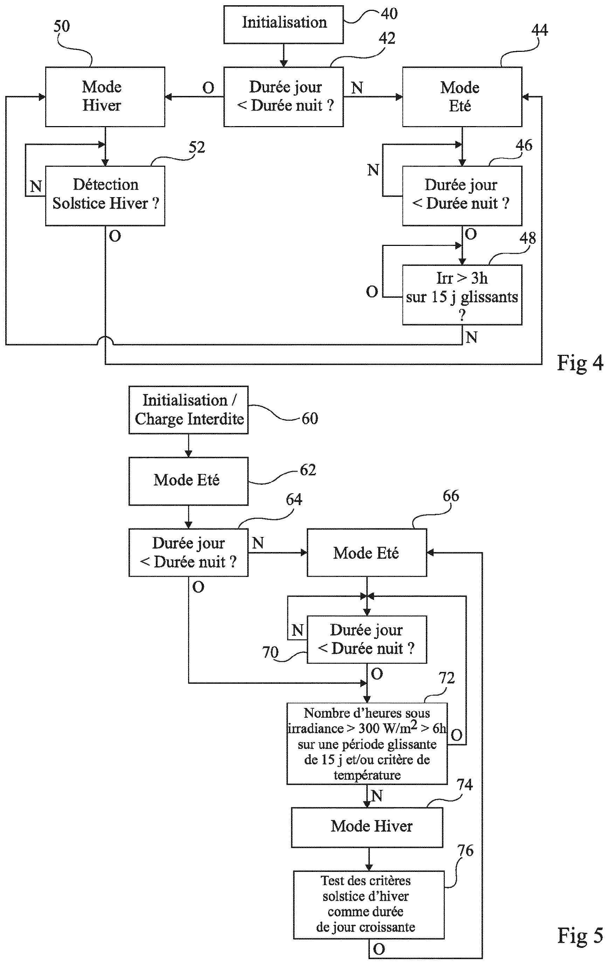

La figure 4 représente un diagramme de fonctionnement plus détaillé d'un mode de réalisation du deuxième procédé de commande.

L'étape 40 correspond à un état d'initialisation dans lequel se place automatiquement le module de commande 20 au premier démarrage du système autonome 10, par exemple à la mise sous tension du système autonome 10. Selon un mode de réalisation, à l'étape 40, une opération de charge de la batterie 40 est interdite par le module 20. En effet, au démarrage du système autonome 10, la batterie 14 est généralement préchargée, de préférence entre 60 % et 70 %. Il est donc avantageux d'attendre la détermination du mode de fonctionnement hivernal ou estival du système autonome avant de débuter une opération de charge pour éviter de charger la batterie 14 si cela n'est pas nécessaire. Selon un autre mode de réalisation, à l'étape 40, une opération de charge de la batterie 14 est autorisée selon un mode de fonctionnement défini par défaut, par exemple le mode de fonctionnement estival. Ceci permet, de façon avantageuse, si la batterie 14 est partiellement déchargée à la mise sous tension du système autonome 10, de commencer à compléter sa charge à 70 % sans avoir à attendre un cycle complet jour/nuit pour effectuer le test décrit par la suite à l'étape 42. Le procédé se poursuit à l'étape 42.

A l'étape 42, le module de commande 20 détermine si l'équinoxe d'automne est atteint. Selon un mode de réalisation, le module de commande 20 détermine si la durée du jour est inférieure à un seuil, de préférence 12 heures. Selon un mode de réalisation, lorsque le générateur électrique 16 comprend des cellules photovoltaïques, la durée du jour est égale à la durée pendant laquelle la tension à vide de la centrale photovoltaïque est supérieure à un seuil. La tension à vide de la centrale photovoltaïque correspond à la tension aux bornes de la centrale photovoltaïque lorsqu'aucun courant ne circule entre ces bornes. Le seuil peut dépendre du type de cellules photovoltaïques utilisées et peut correspondre à un pourcentage de la tension nominale de la centrale photovoltaïque. Selon un mode de réalisation, lorsque le générateur électrique 16 comprend des cellules photovoltaïques, la durée du jour peut être déterminée à partir de la mesure fournie par un capteur d'éclairement. Selon un mode de réalisation, lorsque le générateur électrique 16 ne comprend pas de cellules photovoltaïques, la durée du jour peut être déterminée à partir d'un signal fourni par un capteur d'ensoleillement relié au module de commande 20. Si la durée du jour est sensiblement supérieure à 12 heures à plus ou moins quinze minutes près, le procédé se poursuit à l'étape 44 à laquelle le module de commande 20 passe en mode de fonctionnement estival. Si la durée du jour est sensiblement inférieure à 12 heures, le procédé se poursuit à l'étape 50 à laquelle le module de commande 20 passe en mode de fonctionnement hivernal.

A l'étape 44, le module de commande 20 passe en mode de fonctionnement estival. Le taux de charge maximal de la batterie 14 est mis au taux de charge maximal du mode de fonctionnement estival, variant de préférence de 60 % à 70 %. En outre, le procédé de charge de la batterie 14, c'est-à-dire la commande du circuit de charge 18 par le module de commande 20, peut être spécifique dans le mode de fonctionnement estival. A titre d'exemple, le courant maximal de charge de la batterie 14 peut être limité. Le mode de fonctionnement estival se poursuit tant qu'il n'y a pas de passage en mode hivernal et tant qu'il n'y a pas d'interruption de charge demandée par le premier procédé de fonctionnement décrit précédemment. Le procédé se poursuit à l'étape 46.

A l'étape 46, le module de commande 20 détermine si l'équinoxe d'automne est atteint. Cela peut être réalisé comme à l'étape 42. Si la durée du jour est sensiblement supérieure à 12 heures, le procédé reste à l'étape 46. Si la durée du jour est sensiblement inférieure à 12 heures, le procédé se poursuit à l'étape 48.

A l'étape 48, dans le cas où le générateur électrique 16 comprend des cellules photovoltaïques, le module de commande 20 détermine si la durée d'irradiance globale forte reçue par les cellules photovoltaïques 16 diminue en dessous d'un seuil de durée. Il est avantageux que la durée d'irradiance globale forte soit déterminée sur une fenêtre d'analyse de plusieurs jours consécutifs, de préférence 15 jours, pour être représentative d'une tendance globale de l'évolution des conditions météorologiques. Les valeurs d'irradiance globale sont, par exemple, déterminées à intervalles réguliers, de préférence toutes les 5 minutes. Il est avantageux que le pas de mesure soit inférieur à 15 minutes pour que la détermination de la durée d'irradiance globale forte soit peu modifiée par de fortes variations sur de courtes durées de l'irradiance globale, par exemple lorsque le soleil est brièvement caché par des nuages. Les valeurs d'irradiance globale sont stockées en mémoire par le module de commande 20. Le module de commande 20 détermine le nombre d'heures dans la fenêtre d'analyse pendant lesquelles l'irradiance globale est supérieure à un seuil, de préférence 300 W/m². Seules les périodes de temps passées au-dessus du seuil sont comptabilisées. Si ce nombre d'heures est inférieur un seuil, par exemple 3 heures, le procédé se poursuit à l'étape 50 pour un passage en mode de fonctionnement hivernal. Si le nombre d'heures ainsi déterminé est supérieur au seuil, le procédé reste à l'étape 48 et la détermination du nombre d'heures est réalisée à nouveau en décalant la fenêtre d'analyse. La fenêtre d'analyse est donc une fenêtre glissante, de préférence de 15 jours, sur laquelle sont réalisées les mesures d'irradiance globale. A titre d'exemple, la détermination du nombre d'heures pendant lesquelles l'irradiance globale est supérieure à un seuil est réalisée à chaque nouvelle mesure d'irradiance globale avec les mesures d'irradiance globale réalisées pendant la fenêtre d'analyse qui se termine avec la dernière mesure d'irradiance globale réalisée. Selon un autre exemple, la détermination du nombre d'heures pendant lesquelles l'irradiance globale est supérieure à un seuil est réalisée à intervalles réguliers, de préférence une fois par jour avec les mesures d'irradiance globale réalisées pendant la fenêtre d'analyse qui se termine avec la dernière mesure d'irradiance globale réalisée. De façon avantageuse, le passage du mode de fonctionnement estival au mode de fonctionnement hivernal n'est pas réalisé dès que l'équinoxe d'automne est atteint. Ceci permet de ne pas augmenter trop tôt le taux de charge maximal de la batterie 14 lorsque les conditions météorologiques restent clémentes après l'équinoxe d'automne et permet d'augmenter la durée de vie de la batterie 14.

A l'étape 50, le module de commande 20 passe en mode de fonctionnement hivernal. Le taux de charge maximal de la batterie 14 est mis au taux de charge maximal du mode de fonctionnement hivernal, variant de préférence de 80 % à 100 %. En outre, le procédé de charge de la batterie 14, c'est-à-dire la commande du circuit de charge 18 par le module de commande 20 peut être spécifique dans le mode de fonctionnement hivernal. Le mode de fonctionnement hivernal se poursuit en continu tant qu'il n'y a pas de passage en mode de fonctionnement estival et tant qu'il n'y a pas d'interruption de charges demandée par le premier procédé de fonctionnement décrit précédemment. Le procédé se poursuit à l'étape 52.

A l'étape 52, le module de commande 20 détermine si le solstice d'hiver est atteint. Selon un mode de réalisation, il est considéré que le solstice d'hiver est atteint lorsque le module de commande 20 détermine que la durée des jours, après avoir diminuée, se remet à augmenter. Selon un mode de réalisation, le module de commande 20 stocke en mémoire la durée de chaque jour et détermine la durée du jour moyenne pour plusieurs jours successifs, de préférence 5 jours. Selon un autre mode de réalisation, il est considéré que le solstice d'hiver est atteint lorsque le module de commande 20 détermine que la durée du jour augmente pendant plusieurs jours consécutifs, de préférence 5 jours consécutifs. Ceci permet avantageusement d'éviter une fausse détection du solstice d'hiver dans le cas où il est déterminé une journée de courte durée par erreur, ce qui peut se produire dans le cas de conditions météorologiques particulièrement défavorables ou dans le cas où un écran est placé par erreur devant les cellules photovoltaïques. Le module de commande 20 détermine que le solstice d'hiver a été atteint lorsque la moyenne de durée de jour augmente après avoir diminué. Si le solstice d'hiver n'est pas atteint, le procédé reste à l'étape 52 et la détermination de durée moyenne des journées est réalisée le jour suivant. Si le solstice d'hiver est atteint, le procédé se poursuit à l'étape 44 pour un passage en mode de fonctionnement estival. Le fait de passer en mode de fonctionnement estival suffisamment tôt permet, de façon avantageuse, d'obtenir une réduction de l'état de charge de la batterie 14, qui peut prendre plusieurs mois, avant l'arrivée des températures estivales. Selon un autre mode de réalisation, notamment selon l'application envisagée, un autre jour que le solstice d'hiver peut être considéré à l'étape 52. A titre d'exemple, le module de commande 20 peut déterminer si la durée du jour diminue en deçà d'un seuil, ce qui correspond à une date antérieure au solstice d'hiver, ou si la durée du jour augmente au-delà d'un seuil, ce qui correspond à une date postérieure au solstice d'hiver.

A la fin d'une interdiction de la charge de la batterie 14 résultant de la mise en oeuvre du premier procédé de commande décrit précédemment, le deuxième procédé de commande peut se poursuivre à l'étape à laquelle l'interdiction s'est produite.

De façon avantageuse, la mise en oeuvre du deuxième mode de réalisation ne nécessite pas la détermination de la date du jour par le module de traitement 20. La détermination du mode de fonctionnement du système autonome est réalisée automatiquement lors de sa mise en route.

Selon un mode de réalisation, le module de commande 20 peut, en outre, déterminer si, sur une durée de contrôle de plusieurs mois, par exemple une année, les conditions de fonctionnement du générateur électrique 16 sont défavorables, de façon à maintenir l'état de charge de la batterie de l'ordre de 100 % même dans le mode de fonctionnement estival. Ceci permet, de façon avantageuse, de garantir que la batterie 14 est suffisamment chargée lors du passage suivant dans le mode de fonctionnement hivernal. Selon un mode de réalisation, lorsque le générateur électrique 16 comprend des cellules photovoltaïques, la détermination de conditions de fonctionnement défavorables du générateur électrique 16 peut correspondre à une absence d'ensoleillement direct des cellules photovoltaïques. Ceci peut être déterminé par le module de commande 20 à partir de la mesure d'irradiance globale reçue par les cellules photovoltaïques. Selon un mode de réalisation, il peut être déterminé que les conditions de fonctionnement du générateur électrique 16 sont défavorables lorsque la température de la batterie 14 ne dépasse pas la température maximale Tₘₐₓ sur la durée de contrôle.

La figure 5 représente un diagramme de fonctionnement plus détaillé d'un autre mode de réalisation du deuxième procédé de commande.

L'étape 60 correspond à un état d'initialisation dans lequel se place automatiquement le module de commande 20 au premier démarrage du système autonome 10, par exemple à la mise sous tension du système autonome 10. L'étape 60 correspond également à l'étape à laquelle peut se poursuivre le deuxième procédé de commande à la fin d'une interdiction de la charge de la batterie 14 résultant de la mise en oeuvre du premier procédé de commande décrit précédemment. Le procédé se poursuit à l'étape 62.

A l'étape 62, le module de commande 20 passe en mode de fonctionnement estival comme cela a été décrit précédemment pour l'étape 44. Le procédé se poursuit à l'étape 64.

A l'étape 64, le module de commande 20 détermine si l'équinoxe d'automne est atteint. Ceci peut être réalisé comme cela été décrit précédemment à l'étape 42 ou 44, par exemple en déterminant si la durée du jour est sensiblement inférieure à la durée de la nuit, par exemple entre 11h45 et 12h15. Si la durée du jour est sensiblement supérieure à 12 heures, le procédé se poursuit à l'étape 66. Si la durée du jour est sensiblement inférieure à 12 heures, le procédé se poursuit à l'étape 72.

A l'étape 66, le module de commande 20 passe en mode de fonctionnement estival comme cela a été décrit précédemment pour l'étape 44. Le procédé se poursuit à l'étape 70.

A l'étape 70, le module de commande 20 détermine si l'équinoxe d'automne est atteint. Cela peut être réalisé comme à l'étape 64. Si la durée du jour est sensiblement supérieure à 12 heures, le procédé reste à l'étape 70. Si la durée du jour est sensiblement inférieure à 12 heures, le procédé se poursuit à l'étape 72.

A l'étape 72, le module de commande 20 détermine si la durée d'irradiance globale forte reçue par le système autonome diminue en dessous d'un seuil de durée. Ceci peut être réalisé comme cela a été décrit précédemment à l'étape 48. Si cette durée est inférieure à un seuil, le procédé se poursuit à l'étape 74 pour un passage en mode de fonctionnement hivernal. Si le nombre d'heures ainsi déterminé est supérieur au seuil, le procédé se poursuit à l'étape 70.

A l'étape 74, le module de commande 20 passe en mode de fonctionnement hivernal comme cela a été décrit précédemment pour l'étape 50. Le procédé se poursuit à l'étape 76.

A l'étape 76, le module de commande 20 détermine si le solstice d'hiver est atteint. Ceci peut être réalisé comme cela a été décrit précédemment à l'étape 52. Si le solstice d'hiver n'est pas atteint, le procédé reste à l'étape 76 et le module de commande 20 détermine le jour suivant si le solstice d'hiver est atteint. Si le solstice d'hiver est atteint, le procédé se poursuit à l'étape 66 pour un passage en mode de fonctionnement estival.

Des modes de réalisation particuliers ont été décrits. Diverses variantes et modifications apparaîtront à l'homme de l'art. En particulier, bien que dans les modes de réalisation décrits précédemment le module de commande 20 soit adapté à fonctionner selon deux modes de fonctionnement successifs sur une année, il est clair que plus de deux modes de fonctionnement successifs pourraient être prévus sur une année, un état de charge maximale différent étant associé à chaque mode de fonctionnement.

## Revendications

1. Procédé de charge d'une batterie (14) d'accumulateurs électriques à partir de l'énergie électrique fournie par un générateur électrique (16), dans lequel la batterie est chargée à un premier état de charge maximale dans un premier mode de fonctionnement et à un deuxième état de charge maximale, strictement inférieur au premier état de charge maximale, dans un deuxième mode de fonctionnement, **caractérisé en ce que** le procédé comprend le passage du premier mode de fonctionnement au deuxième mode de fonctionnement lorsqu'une première condition relative à la durée du jour, ou à la variation de la durée du jour, est remplie et comprend le passage du deuxième mode de fonctionnement au premier mode de fonctionnement lorsque des deuxièmes conditions sont remplies, les deuxièmes conditions comprenant la détermination que la durée du jour devient inférieure à un premier seuil de durée et la détermination qu'un critère déterminé à partir des conditions environnementales du générateur électrique ou de la batterie est rempli, dans lequel la première condition consiste à déterminer si la durée du jour est égale à la durée du jour au solstice d'hiver ou à déterminer si la durée du jour augmente pendant plusieurs jours consécutifs ou à déterminer si la durée du jour diminue puis augmente ou à déterminer si la durée du jour devient inférieure ou supérieure à un deuxième seuil de durée strictement inférieur au premier seuil de durée et dans lequel le critère est déterminé à partir de l'irradiance globale reçue par le générateur électrique (16) ou la batterie (14) ou à partir de la température de la batterie ou à partir de l'irradiance globale reçue par des cellules photovoltaïques du générateur électrique ou à partir de la température extérieure, ce qui correspond à sélectionner le mode de fonctionnement hivernal en tant que premier mode de fonctionnement et sélectionner le mode de fonctionnement estival en tant que second mode de fonctionnement.

2. Procédé selon la revendication 1, dans lequel le critère est déterminé à partir de l'irradiance globale reçue par le générateur électrique (16) ou la batterie (14) ou à partir de la température extérieure de la batterie.

3. Procédé selon la revendication 1 ou 2, dans lequel le générateur électrique (16) comprend des cellules photovoltaïques.

4. Procédé selon la revendication 3, dans lequel le critère est déterminé à partir de l'irradiance globale reçue par les cellules photovoltaïques ou de la température extérieure.

5. Procédé selon l'une quelconque des revendications 1 à 4, dans lequel la première condition consiste à déterminer si la durée du jour est égale à la durée du jour au solstice d'hiver.

6. Procédé selon l'une quelconque des revendications 1 à 4, dans lequel la première condition consiste à déterminer si la durée du jour augmente pendant plusieurs jours consécutifs.

7. Procédé selon l'une quelconque des revendications 1 à 4, dans lequel la première condition consiste à déterminer si la durée du jour diminue puis augmente.

8. Procédé selon l'une quelconque des revendications 1 à 4, dans lequel la première condition consiste à déterminer si la durée du jour devient inférieure ou supérieure à un deuxième seuil de durée strictement inférieur au premier seuil de durée.

9. Procédé selon l'une quelconque des revendications 1 à 8, comprenant la détermination de la durée pendant laquelle l'irradiance globale reçue par le générateur électrique (16) ou la batterie (14) est supérieure à un seuil d'irradiance globale ou la détermination de la durée pendant laquelle la température extérieure de la batterie est supérieure à un seuil de température, et dans lequel le critère consiste à déterminer si ladite durée est supérieure à un troisième seuil de durée.

10. Procédé selon l'une quelconque des revendications 1 à 9, dans lequel le premier seuil de durée est égal à 12 heures à plus ou moins 15 minutes.

11. Procédé selon l'une quelconque des revendications 1 à 10, comprenant le passage du deuxième mode de fonctionnement au premier mode de fonctionnement lorsqu'il est déterminé successivement que la durée du jour devient inférieure au premier seuil de durée et que le critère est rempli.

12. Procédé selon l'une quelconque des revendications 1 à 11, dans lequel la charge de la batterie (14) est, en outre, interdite tant que la température de la batterie est supérieure à un premier seuil de température.

13. Procédé selon l'une quelconque des revendications 1 à 12, dans lequel la charge de la batterie (14) est, en outre, interdite tant que la température de la batterie est inférieure à un deuxième seuil de température.

14. Système (10) comprenant un générateur électrique (16), une batterie (14), un circuit (18) de charge de la batterie à partir de l'énergie électrique fournie par le générateur et un module (20) de commande du circuit de charge, le module de commande étant adapté à commander la charge de la batterie à un premier état de charge maximale dans un premier mode de fonctionnement et à un deuxième état de charge maximale, strictement inférieur au premier état de charge maximale, dans un deuxième mode de fonctionnement, **caractérisé en ce que** le module de commande est adapté à passer du premier mode de fonctionnement au deuxième mode de fonctionnement lorsqu'une première condition relative à la durée du jour, ou à la variation de la durée du jour, est remplie et adapté à passer du deuxième mode de fonctionnement au premier mode de fonctionnement lorsque des deuxièmes conditions sont remplies, les deuxièmes conditions comprenant la détermination que la durée du jour devient inférieure à un premier seuil de durée et la détermination qu'un critère déterminé à partir des conditions environnementales du générateur électrique ou de la batterie est rempli, dans lequel la première condition consiste à déterminer si la durée du jour est égale à la durée du jour au solstice d'hiver ou à déterminer si la durée du jour augmente pendant plusieurs jours consécutifs ou à déterminer si la durée du jour diminue puis augmente ou à déterminer si la durée du jour devient inférieure ou supérieure à un deuxième seuil de durée strictement inférieur au premier seuil de durée et dans lequel le critère est déterminé à partir de l'irradiance globale reçue par le générateur électrique (16) ou la batterie (14) ou à partir de la température de la batterie ou à partir de l'irradiance globale reçue par des cellules photovoltaïques du générateur électrique ou à partir de la température extérieure, ce qui correspond à sélectionner le mode de fonctionnement hivernal en tant que premier mode de fonctionnement et sélectionner le mode de fonctionnement estival en tant que second mode de fonctionnement.

15. Système selon la revendication 14, dans lequel le générateur électrique (16) comprend des cellules photovoltaïques.

## Patentansprüche

1. Verfahren zum Laden einer Batterie (14) aus elektrischen Akkumulatoren mit der von einem elektrischen Generator (16) gelieferten elektrischen Energie, wobei die Batterie in einer ersten Betriebsart auf einen ersten maximalen Ladezustand und in einer zweiten Betriebsart auf einen zweiten maximalen Ladezustand, der niedriger ist als der erste maximale Ladezustand, geladen wird, **dadurch gekennzeichnet, dass** das Verfahren das Umschalten von der ersten Betriebsart auf die zweite Betriebsart aufweist, wenn eine erste Bedingung bezüglich der Tageslänge oder einer Veränderung der Tageslänge erfüllt ist, und das Umschalten von der zweiten Betriebsart in die erste Betriebsart aufweist, wenn zweite Bedingungen erfüllt sind, wobei die zweiten Bedingungen Folgendes aufweisen: das Bestimmen, dass die Tageslänge kürzer wird als ein erster Zeitdauer-Schwellenwert, und das Bestimmen, dass ein Kriterium, das aus den Umgebungsbedingungen des elektrischen Generators oder der Batterie bestimmt wird, erfüllt ist, wobei die erste Bedingung Folgendes aufweist: Bestimmen, ob die Tageslänge gleich der Tageslänge bei der Wintersonnenwende ist, oder Bestimmen, ob die Tageslänge für mehrere aufeinanderfolgende Tage zunimmt, oder Bestimmen, ob die Tageslänge zunimmt und dann abnimmt oder Bestimmen, ob die Tageslänge kürzer oder länger als ein zweiter Zeitdauer-Schwellenwert wird, der niedriger als der erste Zeitdauer-Schwellenwert ist, und wobei das Kriterium bestimmt wird aus der vom elektrischen Generator (16) oder der Batterie (14) empfangenen allgemeinen Bestrahlungsstärke, oder aus der Temperatur der Batterie, oder aus der von Photovoltaikzellen des elektrischen Generators empfangenen allgemeinen Bestrahlungsstärke, oder aus der Außentemperatur, was der Auswahl der Winterbetriebsart als erste Betriebsart und der Sommerbetriebsart als zweite Betriebsart entspricht.

2. Verfahren nach Anspruch 1, wobei das Kriterium aus der vom elektrischen Generator (16) oder der Batterie (14) empfangenen allgemeinen Bestrahlungsstärke oder aus der Außentemperatur der Batterie bestimmt wird.

3. Verfahren nach Anspruch 1 oder 2, wobei der elektrische Generator (16) Photovoltaikzellen aufweist.

4. Verfahren nach Anspruch 3, wobei das Kriterium aus der von den Photovoltaikzellen empfangenen allgemeinen Bestrahlungsstärke oder aus der Außentemperatur bestimmt wird.

5. Verfahren nach einem der Ansprüche 1 bis 4, wobei die erste Bedingung das Bestimmen aufweist, ob die Tageslänge gleich der Tageslänge bei der Wintersonnenwende ist.

6. Verfahren nach einem der Ansprüche 1 bis 4, wobei die erste Bedingung das Bestimmen aufweist, ob die Tageslänge für mehrere aufeinanderfolgende Tage zunimmt.

7. Verfahren nach einem der Ansprüche 1 bis 4, wobei die erste Bedingung das Bestimmen aufweist, ob die Tageslänge zunimmt und dann abnimmt.

8. Verfahren nach einem der Ansprüche 1 bis 4, wobei die erste Bedingung das Bestimmen aufweist, ob die Tageslänge kürzer oder länger wird als ein zweiter Zeitdauer-Schwellenwert, der niedriger ist als der erste Zeitdauer-Schwellenwert.

9. Verfahren nach einem der Ansprüche 1 bis 8, aufweisend das Bestimmen der Dauer, für die die vom elektrischen Generator (16) oder der Batterie (14) empfangene allgemeine Bestrahlungsstärke größer ist als ein allgemeiner Bestrahlungsschwellenwert, oder das Bestimmen der Dauer, für die die Außentemperatur der Batterie höher als ein Temperaturschwellenwert ist, und wobei das Kriterium das Bestimmen aufweist, ob die Dauer länger als ein dritter Zeitdauer-Schwellenwert ist.

10. Verfahren nach einem der Ansprüche 1 bis 9, wobei der erste Zeitdauer-Schwellenwert mit einer Abweichung von 15 Minuten bei 12 Stunden liegt.

11. Verfahren nach einem der Ansprüche 1 bis 10, das das Umschalten von der zweiten Betriebsart in die erste Betriebsart aufweist, wenn nacheinander bestimmt wird, dass die Tageslänge kürzer als der erste Zeitdauer-Schwellenwert wird und das Kriterium erfüllt ist.

12. Verfahren nach einem der Ansprüche 1 bis 11, wobei ferner das Laden der Batterie (14) verboten wird, solange die Batterietemperatur höher als ein erster Temperaturschwellenwert ist.

13. Verfahren nach einem der Ansprüche 1 bis 12, wobei ferner das Laden der Batterie (14) verboten wird, solange die Batterietemperatur niedriger als ein zweiter Temperaturschwellenwert ist.

14. System (10), das Folgendes aufweist: einen elektrischen Generator (16), eine Batterie (14), eine Schaltung (18) zum Laden der Batterie aus der vom Generator gelieferten elektrischen Energie und eine Einheit (20) zum Steuern der Ladeschaltung, wobei die Steuereinheit in der Lage ist, in einer ersten Betriebsart die Ladung der Batterie auf einen ersten maximalen Ladezustand und in einer zweiten Betriebsart auf einen zweiten maximalen Ladezustand zu steuern, der niedriger ist als der erste maximale Ladezustand, **dadurch gekennzeichnet, dass** die Steuereinheit in der Lage ist, von der ersten Betriebsart in die zweite Betriebsart zu wechseln, wenn eine erste Bedingung bezüglich der Tageslänge oder der Veränderung der Tageslänge erfüllt ist, und in der Lage ist, von der zweiten Betriebsart in die erste Betriebsart zu wechseln, wenn zweite Bedingungen erfüllt sind, wobei die zweiten Bedingungen das Bestimmen, dass die Tageslänge kürzer wird als ein erster Zeitdauer-Schwellenwert und das Bestimmen, dass ein Kriterium, das aus den Umgebungsbedingungen des elektrischen Generators oder der Batterie bestimmt wird, erfüllt ist, aufweist, wobei die erste Bedingung Folgendes aufweist: das Bestimmen, ob die Tageslänge gleich der Tageslänge bei der Wintersonnenwende ist, oder das Bestimmen, ob die Tageslänge für mehrere aufeinanderfolgende Tage zunimmt, oder das Bestimmen, ob die Tageslänge zunimmt und dann abnimmt oder das Bestimmen, ob die Tageslänge kürzer oder länger als ein zweiter Zeitdauer-Schwellenwert wird, der niedriger ist als der erste Zeitdauer-Schwellenwert, und wobei das Kriterium bestimmt wird aus der vom elektrischen Generator (16) oder der Batterie (14) empfangenen allgemeinen Bestrahlungsstärke oder aus der Temperatur der Batterie oder aus der von Photovoltaikzellen des elektrischen Generators empfangenen allgemeinen Bestrahlungsstärke oder aus der Außentemperatur, was der Auswahl der Winterbetriebsart als erste Betriebsart und der Sommerbetriebsart als zweite Betriebsart entspricht.

15. Verfahren nach Anspruch 14, wobei der elektrische Generator (16) Photovoltaikzellen aufweist.

## Claims

1. A method of charging a battery (14) of electric accumulators from the electric energy supplied by an electric generator (16), wherein the battery is charged to a first maximum state-of-charge in a first operating mode and to a second maximum state-of-charge, lower than the first maximum state-of-charge, in a second operating mode, **characterized in that** the method comprises switching from the first operating mode to the second operating mode when a first condition relative to the day length, or to the variation of the day length, is fulfilled, and comprises switching from the second operating mode to the first operating mode when second conditions are fulfilled, the second conditions comprising determining that the day length becomes shorter than a first duration threshold and determining that a criterion determined from the environmental conditions of the electric generator or of the battery is fulfilled, wherein the first condition comprises determining whether the day length is equal to the day length at the winter solstice or determining whether the day length increases for several consecutive days or determining whether the day length increases and then decreases or determining whether the day length becomes shorter or longer than a second duration threshold lower than the first duration threshold and wherein the criterion is determined from the general irradiance received by the electric generator (16) or the battery (14) or from the temperature of the battery or from the general irradiance received by photovoltaic cells of the electric generator or from the outer temperature, which corresponds to selecting the winter operating mode as the first operating mode and selecting the summer operating mode as the second operating mode.

2. The method of claim 1, wherein the criterion is determined from the general irradiance received by the electric generator (16) or the battery (14) or from the outer temperature of the battery.

3. The method of claim 1 or 2, wherein the electric generator (16) comprises photovoltaic cells.

4. The method of claim 3, wherein the criterion is determined from the general irradiance received by the photovoltaic cells or from the outer temperature.

5. The method of any of claims 1 to 4, wherein the first condition comprises determining whether the day length is equal to the day length at the winter solstice.

6. The method of any of claims 1 to 4, wherein the first condition comprises determining whether the day length increases for several consecutive days.

7. The method of any of claims 1 to 4, wherein the first condition comprises determining whether the day length increases and then decreases.

8. The method of any of claims 1 to 4, wherein the first condition comprises determining whether the day length becomes shorter or longer than a second duration threshold lower than the first duration threshold.

9. The method of any of claims 1 to 8, comprising determining the duration for which the general irradiance received by the electric generator (16) or the battery (14) is greater than a general irradiance threshold or determining the duration for which the outer temperature of the battery is higher than a temperature threshold, and wherein the criterion comprises determining whether said duration is longer than a third duration threshold.

10. The method of any of claims 1 to 9, wherein the first duration threshold is equal to 12 hours, to within 15 minutes.

11. The method of any of claims 1 to 10, comprising switching from the second operating mode to the first operating mode when it is successively determined that the day length becomes shorter than the first duration threshold and that the criterion is fulfilled.

12. The method of any of claims 1 to 11, wherein the charge of the battery (14) is further forbidden as long as the battery temperature is higher than a first temperature threshold.

13. The method of any of claims 1 to 12, wherein the charge of the battery (14) is further forbidden as long as the battery temperature is lower than a second temperature threshold.

14. A system (10) comprising an electric generator (16), a battery (14), a circuit (18) for charging the battery from the electric energy supplied by the generator, and a unit (20) for controlling the charge circuit, the control unit being capable of controlling the charge of the battery to a first maximum state-of-charge in a first operating mode and to a second maximum state-of-charge, lower than the first maximum state-of-charge, in a second operating mode, **characterized in that** the control unit is capable of switching from the first operating mode to the second operating mode when a first condition relative to the day length, or to the variation of the day length, is fulfilled, and capable of switching from the second operating mode to the first operating mode when second conditions are fulfilled, the second conditions comprising determining that the day length becomes shorter than a first duration threshold and determining that a criterion determined from the environmental conditions of the electric generator or of the battery is fulfilled, wherein the first condition comprises determining whether the day length is equal to the day length at the winter solstice or determining whether the day length increases for several consecutive days or determining whether the day length increases and then decreases or determining whether the day length becomes shorter or longer than a second duration threshold lower than the first duration threshold and wherein the criterion is determined from the general irradiance received by the electric generator (16) or the battery (14) or from the temperature of the battery or from the general irradiance received by photovoltaic cells of the electric generator or from the outer temperature, which corresponds to selecting the winter operating mode as the first operating mode and selecting the summer operating mode as the second operating mode.

15. The method of claim 14, wherein the electric generator (16) comprises photovoltaic cells.
